# EUROPEAN PATENT SPECIFICATION

(11) **EP 4 690 156 B1**
(45) Date of publication and mention of the grant of the patent: **02.12.2026**
(21) Application number: 24789497.5
(22) Date of filing: 12.04.2024
(51) Int. Cl.: H04W 4/00, H04W 4/029, H04W 4/30, G07C 1/22, G08B 1/00, G04F 8/08, H04B 1/034, G04B 47/00, A63B 69/00, A63B 71/06, G04G 21/00

(54) **IMPROVED METHODS, DEVICES, AND SYSTEMS FOR FACILITATING UMPIRES OFFICIATING A BASEBALL GAME**
VERBESSERTE VERFAHREN, VORRICHTUNGEN UND SYSTEME ZUR ERLEICHTERUNG DES UMSPIRESSIERENS EINES BASEBALLSPIELS
PROCÉDÉS, DISPOSITIFS ET SYSTÈMES AMÉLIORÉS POUR AIDER DES ARBITRES ARBITRANT UNE PARTIE DE BASEBALL

(30) Priority: 12.04.2023 US 202363495582 P
(43) Date of publication of application: 11.02.2026
(73) Proprietor: Ustopit, Inc., Raleigh, NC 27609 (US)
(72) Inventor: FOGLEMAN, Keith David, Raleigh, NC 27609 (US); PRATHER, Edward Clarke, Hendersonville, NC 28791 (US)
(74) Representative: Mewburn Ellis LLP
(86) International application number: PCT/US2024/024192
(87) International publication number: WO 2024/215971

(56) References cited:
- US-A1- 2004 184 354
- US-A1- 2004 184 354
- US-A1- 2012 170 427
- US-A1- 2022 416 821
- US-A1- 2022 416 821
- US-B1- 6 369 697
- US-B1- 6 369 697
- FISHER ERIC: "MLB rule changes spark technology additions for ballparks", STADIUM TECH REPORT, 30 March 2023 (2023-03-30), XP093238728, Retrieved from the Internet <URL:https://stadiumtechreport.com/feature/mlb-rule-changes-spark-technology-additions-for-ballparks/#:~:text=More%20upgrades%20for%20Statcast&text=Each%20ballpark%20has%20a%2012,help%20support%20the%20bat%20tracking.>

## Description

### PRIORITY CLAIM

This application claims the benefit of priority of U.S. Provisional Patent Application Serial No. 63/495,582, (Attorney Docket No. 1265/8 PROV) titled "IMPROVED METHODS, DEVICES, AND SYSTEMS FOR FACILITATING UMPIRES OFFICIATING A BASEBALL GAME," filed April 12, 2023.

### TECHNICAL FIELD

The present invention relates to a mobile device and more specifically to methods, devices, and systems for facilitating umpires officiating a baseball game.

### BACKGROUND

Umpires have many duties and responsibilities before, during, and even after a baseball game. Umpires must have a thorough understanding of the given rules that may have variation over high school, collegiate, and professional games. Umpires must observe game play closely and make calls based on the application of the given rules and assess any required penalties. On a contested play, they must consult with other umpires and/or playback screens to make a final call. Umpires must resolve rule infraction claims and complaints from both players and coaches. Additionally, they may be required to verify credentials of both teams (players and coaches) and ensure both teams follow all safety regulations. As such, umpires must have excellent negotiation and problem solving skills with the ability to make quick (and sound) decisions. They must act with integrity and accuracy while performing their duties under pressure.

Accordingly, a need exists for better solutions to facilitate umpires of baseball games.

Document US 6 369 697 B1 relates to a timing system for football that includes timer displays that start and stop the timing process in response to each switch actuation signal. There is also an additional timer whose operation is controlled by enabling or disabling the timer displays.

Document US 2004/184354 A1 relates to an athletic event timing and communication system that includes timing and mobile field communicators. Each communicator has a channel selector that is synchronised to assign a unique address.

Document US 2022/416821 A1 relates to a system for wirelessly communicating pitch selections from a transmitter.

### SUMMARY

The presently disclosed subject matter is directed toward methods, devices, and systems for facilitating umpires officiating a baseball game.

According to one embodiment, a mobile device is disclosed for facilitating an umpire of a baseball game. The mobile device includes a processor, a memory electrically coupled with the processor, a user interface electrically coupled with the processor, a haptic feedback device electrically coupled with the processor, and a wireless transceiver electrically coupled with the processor. The processor is configured for (1) receiving a start pitch clock selection via the user interface; (2) upon receiving the start pitch clock selection via the user interface, transmitting a start pitch clock device message via the wireless transceiver to an access point; (3) receiving a start pitch clock access point acknowledgment message from the access point; and (4) upon receiving the start pitch clock access point acknowledgment message, momentarily activating the haptic feedback device (e.g., using a unique pitch clock start vibration pattern). The access point is electrically coupled with a scoreboard controller. Additionally, the access point is configured for starting an external pitch clock timer on the scoreboard controller upon receiving the start pitch clock device message and/or starting an internal pitch clock timer within the access point upon receiving the pitch clock device message.

In some embodiments, upon receiving the start pitch clock device message the access point may be further configured for resetting the external pitch clock timer on the scoreboard controller prior to starting the external pitch clock timer and/or resetting the internal pitch clock timer within the access point prior to starting the internal pitch clock timer.

In some embodiments, the processor may be further configured for receiving a reset pitch clock selection via the user interface; upon receiving the reset pitch clock selection via the user interface, transmitting a reset pitch clock device message via the wireless transceiver to the access point; receiving a reset pitch clock access point acknowledgment message from the access point; and upon receiving the reset pitch clock access point acknowledgment message, momentarily activating the haptic feedback device (e.g., using a pitch clock reset vibration pattern). The access point may be further configured for resetting the external pitch clock timer on the scoreboard controller upon receiving the reset pitch clock device message and/or resetting the internal pitch clock timer within the access point upon receiving the pitch clock device message.

In some embodiments, the processor may be further configured for receiving an increment ball count selection via the user interface; upon receiving the increment ball count selection via the user interface, transmitting an increment ball count device message via the wireless transceiver to the access point; receiving an increment ball count access point acknowledgment message from the access point; and upon receiving the increment ball count access point acknowledgment message, momentarily activating the haptic feedback device (e.g., using a unique ball count increment vibration pattern). Additionally, the access point may be further configured for incrementing a ball count on the scoreboard controller upon receiving the increment ball count device message.

In some embodiments, the processor may be further configured for receiving an increment strike count selection via the user interface; upon receiving the increment strike count selection via the user interface, transmitting an increment strike device message via the wireless transceiver to the access point; receiving an increment strike count access point acknowledgment message from the access point; and upon receiving the increment strike count access point acknowledgment message, momentarily activating the haptic feedback device(e.g., using a unique strike count increment vibration pattern). Additionally, the access point may be further configured for incrementing a strike count on the scoreboard controller upon receiving the increment strike count device message.

In some embodiments, the processor may be further configured for receiving a batter-must-be-in-box message from the access point; and momentarily activating the haptic feedback device (e.g., using a unique batter-must-be-in-box vibration pattern) upon receiving the batter-must-be-in-box message. Additionally, the batter-must-be-in-box message may be transmitted from the access point based on a first time interval after receiving the start pitch clock device message. In further embodiments, the first time interval may be approximately ten seconds.

In some embodiments, the user interface may include a pitch-clock momentary switch. The processor may be further configured for receiving the start pitch clock selection via the pitch-clock-momentary switch. The first time interval may be associated with a league pitch clock time requirement.

In other embodiments, the user interface may include a no-runners-on-base-pitch-clock momentary switch and a runners-on-base-pitch-clock momentary switch. The processor may be further configured for receiving the start pitch clock selection via either the no-runners-on-base-pitch-clock-momentary switch or the runners-on-base-pitch-clock momentary switch. Upon receiving the start pitch clock selection via the no-runners-on-base-pitch-clock-momentary switch, the first time interval may become associated with a league no-runners-on-base pitch clock time requirement. Upon receiving the start pitch clock selection via the runners-on-base-pitch-clock-momentary switch, the first time interval may become associated with a league runners-on-base pitch clock time requirement.

In some embodiments, the processor may be further configured for receiving a pitch clock expiration message from the access point; and momentarily activating the haptic feedback device (e.g., using a unique pitch clock expiration vibration pattern) upon receiving the pitch clock expiration message. Additionally, the pitch clock expiration message may be transmitted from the access point based on a second time interval after receiving the start pitch clock device message. In further embodiments, the second time interval may be approximately twenty seconds. Additionally, second time interval may also be associated with a league pitch clock time requirement. The second time interval may be associated with a league no-runners-on-base pitch clock time requirement or a league runners-on-base pitch clock time requirement.

In some embodiments, the processor may be further configured for receiving a start between-inning clock selection via the user interface; upon receiving the start between-inning clock selection via the user interface, transmitting a start between-inning clock device message via the wireless transceiver to the access point; receiving a start between-inning clock access point acknowledgment message from the access point; and upon receiving the start between-inning clock access point acknowledgment message, momentarily activating the haptic feedback device (e.g., using a unique between-inning start clock vibration pattern). Additionally, the access point may be further configured for starting an external between-inning clock timer on the scoreboard controller upon receiving the start between inning clock device message and/or starting an internal between-inning clock timer within the access point upon receiving the start between inning clock device message.

In some embodiments, the processor may be further configured for receiving a between-inning warning message from the access point; and momentarily activating the haptic feedback device (e.g., using a unique warning between-inning vibration pattern) upon receiving the between-inning warning message. Additionally, the between-inning warning message may be transmitted from the access point based on a third time interval after receiving the start between-inning clock device message. In further embodiments, the third time interval may be approximately ninety seconds.

In some embodiments, the user interface may include a between-inning clock momentary switch. The processor may be further configured for receiving the start between-inning clock selection via between-inning clock momentary switch. The third time interval may be associated with a league between-inning clock time requirement.

In some embodiments, the processor may be further configured for receiving a between-inning expiration message from the access point; and momentarily activating the haptic feedback device (e.g., using a unique expiration between inning vibration pattern) upon receiving the between-inning expiration message. Additionally, the between-inning expiration message may be transmitted from the access point based on a fourth time interval after receiving the start between-inning clock device message. In further embodiments, the fourth time interval may be approximately one hundred twenty seconds. The fourth interval may also be associated with a league between-inning clock time requirement.

In some embodiments, the processor may be further configured for receiving a start between-batter clock selection via the user interface and transmitting a start between-batter clock device message via the wireless transceiver to the access point upon receiving the start between-batter clock selection. The processor may be further configured for receiving a start between-batter clock access point acknowledgment message from the access point and upon receiving the start between-batter clock access point acknowledgment message, momentarily activating the haptic feedback device (e.g., using a unique between-batter start clock vibration pattern). The access point may be further configured for starting an external between-batter clock timer on the scoreboard controller upon receiving the start between-batter clock device message and starting an internal between-batter clock timer within the access point upon receiving the start between-batter clock device message.

In some embodiments, the processor the processor may be further configured for receiving a between-batter warning message from the access point and momentarily activating the haptic feedback device (e.g., using a unique warning between-batter vibration pattern) upon receiving the between-inning warning message. The between-inning warning message may be transmitted from the access point based on a fifth time interval after receiving the start between-batter clock device message.

In some embodiments, the user interface may include a between-batter clock momentary switch and the processor may be further configured for receiving the start between-batter clock selection via between-batter clock momentary switch. The fifth time interval may be associated with a league between-batter clock time requirement.

In some embodiments, the processor may be further configured for receiving a between-batter expiration message from the access point and momentarily activating the haptic feedback device (e.g., using a unique expiration between-batter vibration pattern) upon receiving the between-inning expiration message. The between-batter expiration message may be transmitted from the access point based on a sixth time interval after receiving the start between-batter clock device message. The sixth interval may be associated with a league between-batter clock time requirement.

In some embodiments, the user interface may include a push button.

In some embodiments, the user interface may include a graphical user interface (GUI). In further embodiments, the GUI may include a touch pad display.

In some embodiments, the mobile device may further include a belt clip.

In some embodiments, the mobile device may further include a rechargeable battery. In further embodiments, the rechargeable battery may be a lithium-ion rechargeable battery.

In some embodiments, the mobile device may further include a charging port electrically coupled with the rechargeable battery. In further embodiments, the charging port may be compliant to a universal serial bus (USB) charger.

In other embodiments, the charging port may be a wireless charging port.

In certain embodiments, the wireless transceiver may be a wide-band direct sequence spread spectrum (WBDSSS) wireless transceiver. In further embodiments, the WBDSSS wireless transceiver may be configured to transmit and receive signals within a 902 megahertz (MHz) to 928 MHz frequency band.

In another embodiment, a method is implemented on a mobile device for facilitating an umpire of a baseball game. The mobile device includes a processor, a memory electrically coupled with the processor, a user interface electrically coupled with the processor, a haptic feedback device electrically coupled with the processor, and a wireless transceiver electrically coupled with the processor. The method includes (1) receiving a start pitch clock selection via the user interface; (2) upon receiving the start pitch clock selection via the user interface, transmitting a start pitch clock device message via the wireless transceiver to an access point; (3) receiving a start pitch clock access point acknowledgment message from the access point; and (4) upon receiving the start pitch clock access point acknowledgment message, momentarily activating the haptic feedback device. The access point is electrically coupled with a scoreboard controller. Additionally, the access point is configured for starting an external pitch clock timer on the scoreboard controller upon receiving the start pitch clock device message and/or starting an internal pitch clock timer with the access point upon receiving the pitch clock device message.

In another embodiment, a non-transitory computer-readable storage medium is disclosed. The non-transitory computer-readable medium stores instructions to be implemented on a mobile device for facilitating an umpire of a baseball game. The instructions when executed by a processor cause the mobile device to perform a method. The method includes (1) receiving a start pitch clock selection via the user interface; (2) upon receiving the start pitch clock selection via the user interface, transmitting a start pitch clock device message via the wireless transceiver to an access point; (3) receiving a start pitch clock access point acknowledgment message from the access point; and (4) upon receiving the start pitch clock access point acknowledgment message, momentarily activating the haptic feedback device. The access point is electrically coupled with a scoreboard controller. Additionally, the access point is configured for starting an external pitch clock timer on the scoreboard controller upon receiving the start pitch clock device message and/or starting an internal pitch clock timer with the access point upon receiving the start pitch clock device message.

In another embodiment, an access point for facilitating a plurality of umpires of a baseball game is disclosed. The access point includes a processor, a memory electrically coupled with the processor, a user interface electrically coupled with the processor, a scoreboard controller interface electrically coupled with the processor, and a wireless transceiver electrically coupled with the processor. The wireless transceiver is configured for transmitting and receiving signals from a plurality of mobile devices operated by the plurality of umpires. The processor is configured for (1) receiving a start pitch clock device message via the wireless transceiver from each mobile device of the plurality of mobile devices; and (2) upon receiving the start pitch clock device message from any one of the plurality of mobile devices, transmitting a start pitch clock access point acknowledgment message via the wireless transceiver to the plurality of mobile devices, and each mobile device of the plurality of mobile devices is configured for momentarily activating a haptic feedback device upon receiving the start pitch clock access point acknowledgment message. Additionally, the processor is further configured for starting an external pitch clock timer on the scoreboard controller via the scoreboard controller upon receiving the start pitch clock device message, and/or starting an internal pitch clock timer within the access point upon receiving the start pitch clock device message.

In some embodiments, the start pitch clock device message and the external pitch clock timer may be associated with a league pitch clock time requirement. In further embodiments, the start pitch clock device message and the external pitch clock timer may be further associated with a league no-runners-on-base pitch clock time requirement and/or a league runners-on-base pitch clock time requirement.

In some embodiments, the start pitch clock device message and the internal pitch clock timer may be associated with a league pitch clock time requirement. In further embodiments, the start pitch clock device message and the internal pitch clock timer may be further associated with a league no-runners-on-base pitch clock time requirement and/or a league runners-on-base pitch clock time requirement.

In some embodiments, upon receiving the start pitch clock device message the processor is further configured for resetting the external pitch clock timer on the scoreboard controller prior to starting the external pitch clock timer and/or resetting the internal pitch clock timer within the access point prior to starting the internal pitch clock timer.

In some embodiments, the processor may be further configured for receiving a reset pitch clock device message via the wireless transceiver from each mobile device of the plurality of mobile devices; upon receiving the reset pitch clock device message from any one of the plurality of mobile devices, transmitting a reset pitch clock access point acknowledgment message via the wireless transceiver to the plurality of mobile devices, wherein each mobile device of the plurality of mobile devices is configured for momentarily activating their haptic feedback device upon receiving the reset pitch clock access point acknowledgment message. Additionally, the processor may be further configured for resetting the external pitch clock timer on the scoreboard controller via the scoreboard controller upon receiving the reset pitch clock device message and/or resetting the internal pitch clock timer within the access point upon receiving the reset pitch clock device message.

In some embodiments, the processor may be further configured for receiving a start between-inning clock device message via the wireless transceiver from each mobile device of the plurality of mobile devices; upon receiving the start between-inning clock device message from any one of the plurality of mobile devices, transmitting a start between-inning clock access point acknowledgment message via the wireless transceiver to the plurality of mobile devices, wherein each mobile device of the plurality of mobile devices is configured for momentarily activating their haptic feedback device upon receiving the start between-inning clock access point acknowledgment message. Additionally, the processor may be further configured for starting an external between-inning clock timer on the scoreboard controller via the scoreboard controller interface upon receiving the start between-inning clock device message and/or starting an internal between-inning clock timer within the access point upon receiving the start between-inning clock device message.

In some embodiments, the processor may be further configured for receiving an increment ball count device message via the wireless transceiver from each mobile device of the plurality of mobile devices; upon receiving the increment ball count device message from any one of the plurality of mobile devices, transmitting an increment ball count access point acknowledgment message via the wireless transceiver to the plurality of mobile devices, wherein each mobile device of the plurality of mobile devices is configured for momentarily activating their haptic feedback device upon receiving the increment ball count access point acknowledgment message; and configuring the scoreboard controller, via the scoreboard controller interface, for incrementing a ball count on the scoreboard controller upon receiving the start between-inning clock device message.

In some embodiments, the processor may be further configured for receiving an increment strike count device message via the wireless transceiver from each mobile device of the plurality of mobile devices; upon receiving the increment strike count device message from any one of the plurality of mobile devices, transmitting an increment strike count access point acknowledgment message via the wireless transceiver to the plurality of mobile devices, wherein each mobile device of the plurality of mobile devices is configured for momentarily activating their haptic feedback device upon receiving the increment strike count access point acknowledgment message; and configuring the scoreboard controller, via the scoreboard controller interface, for incrementing a strike count on the scoreboard controller upon receiving the start between-inning clock device message.

In some embodiments, the processor may be further configured for receiving a batter-must-be-in-box scoreboard message from the scoreboard controller interface; and upon receiving the batter-must-be-in-box scoreboard message, transmitting a batter-must-be-in-box access point message via the wireless transceiver to the plurality of mobile devices. Additionally, each mobile device of the plurality of mobile devices may be configured for momentarily activating their haptic feedback device upon receiving the batter-must-be-in-box access point message. In further embodiments, the batter-must-be-in-box scoreboard message may be transmitted from the scoreboard controller based on a first time interval after receiving a start pitch clock access point message. In still further embodiments, the first time interval may be approximately ten seconds.

In some embodiments, the processor may be further configured for receiving a pitch clock expiration scoreboard message from the scoreboard controller interface; and upon receiving the pitch clock expiration scoreboard message, transmitting a pitch clock expiration access point message via the wireless transceiver to the plurality of mobile devices, wherein each mobile device of the plurality of mobile devices is configured for momentarily activating their haptic feedback device upon receiving the pitch clock expiration access point message. In further embodiments, the pitch clock expiration scoreboard message may be transmitted from the scoreboard controller based on a second time interval after receiving the start pitch clock access point message. In still further embodiments, the second time interval may be approximately twenty seconds.

In some embodiments, the processor may be further configured for receiving a between-inning warning scoreboard message from the scoreboard controller interface; and upon receiving the between-inning warning scoreboard message, transmitting a between-inning warning access point message via the wireless transceiver to the plurality of mobile devices. Additionally, each mobile device of the plurality of mobile devices may be configured for momentarily activating their haptic feedback device upon receiving the between-inning warning access point message. In further embodiments, the between-inning warning scoreboard message may be transmitted from the scoreboard controller based on a third time interval after receiving a between-inning clock access point message. In still further embodiments, the third time interval may be approximately ninety seconds.

In some embodiments, the processor may be further configured for receiving a between-inning expiration scoreboard message from the scoreboard controller interface; and upon receiving the between-inning expiration scoreboard message, transmitting a between-inning expiration access point message via the wireless transceiver to the plurality of mobile devices. Additionally, each mobile device of the plurality of mobile devices may be configured for momentarily activating their haptic feedback device upon receiving the between-inning expiration access point message. In further embodiments, the between-inning expiration scoreboard message may be transmitted from the scoreboard controller based on a fourth time interval after receiving the between-inning clock access point message. In still further embodiments, the fourth time interval may be approximately one hundred twenty seconds.

In some embodiments, the processor may be further configured for receiving a start between-batter clock device message via the wireless transceiver from each mobile device of the plurality of mobile devices; and upon receiving the start between-batter clock device message from any one of the plurality of mobile devices, transmitting a start between-batter clock access point acknowledgment message via the wireless transceiver to the plurality of mobile devices. Each mobile device of the plurality of mobile devices may be configured for momentarily activating their haptic feedback device upon receiving the start between-batter clock access point acknowledgment message. Additionally, the processor may be further configured for starting an external between-batter clock timer on the scoreboard controller via the scoreboard controller interface upon receiving the start between-batter clock device message; and/or starting an internal between-batter clock timer within the access point upon receiving the start between-inning clock device message.

In some embodiments, the processor may be further configured for receiving a between-batter warning scoreboard message from the scoreboard controller interface; and upon receiving the between-batter warning scoreboard message, transmitting a between-batter warning access point message via the wireless transceiver to the plurality of mobile devices. Each mobile device of the plurality of mobile devices may be configured for momentarily activating their haptic feedback device upon receiving the between-batter warning access point message. The between-batter warning scoreboard message may be transmitted from the scoreboard controller based on a fifth time interval after receiving a between-batter clock access point message. In certain embodiments, the fifth time interval may be approximately twenty-two seconds.

In some embodiments, the processor may be further configured for receiving a between-batter expiration scoreboard message from the scoreboard controller interface; and upon receiving the between-batter expiration scoreboard message, transmitting a between-batter expiration access point message via the wireless transceiver to the plurality of mobile devices. Each mobile device of the plurality of mobile devices may be configured for momentarily activating their haptic feedback device upon receiving the between-batter expiration access point message. The between-inning expiration scoreboard message may be transmitted from the scoreboard controller based on a sixth time interval after receiving the between-batter clock access point message. In certain embodiments, the sixth time interval may be approximately thirty seconds.

In some embodiments, the user interface may include a GUI. In further embodiments, the GUI may include a touch pad display.

In some embodiments, the wireless transceiver may be a wide-band direct sequence spread spectrum (WBDSSS) wireless transceiver. In further embodiments, the WBDSSS wireless transceiver may be configured to transmit and receive signals within a 902 megahertz (MHz) to 928 MHz frequency band.

In certain embodiments, the scoreboard controller interface may include an XLR connector, a DIN connector, an RJ11 connector, an RJ45 connector, or the like.

In another embodiment, a method implemented on an access point for facilitating a plurality of umpires of a baseball game is disclosed. The access point includes a processor, a memory electrically coupled with the processor, a user interface electrically coupled with the processor, a scoreboard controller interface electrically coupled with the processor, and a wireless transceiver electrically coupled with the processor. The wireless transceiver is configured for transmitting and receiving signals from a plurality of mobile devices operated by the plurality of umpires. The processor is configured for (1) receiving a start pitch clock device message via the wireless transceiver from each mobile device of the plurality of mobile devices; and (2) upon receiving the start pitch clock device message, transmitting a start pitch clock access point acknowledgment message via the wireless transceiver to the plurality of mobile devices, and each mobile device of the plurality of mobile devices is configured for momentarily activating a haptic feedback device upon receiving the start pitch clock access point acknowledgment message.

In some embodiments, the method may further include starting an external pitch clock timer on the scoreboard controller via the scoreboard controller interface upon receiving the start pitch clock device message.

In some embodiments, the method may further include starting an internal pitch clock timer within the access point upon receiving the start pitch clock device message.

In another embodiment, a non-transitory computer-readable storage medium is disclosed. The non-transitory computer-readable medium stores instructions to be implemented on an access point for facilitating a plurality of umpires of a baseball game. The instructions when executed by a processor cause the access point to perform a method. The access point includes a processor, a memory electrically coupled with the processor, a user interface electrically coupled with the processor, a scoreboard controller interface electrically coupled with the processor, and a wireless transceiver electrically coupled with the processor. The wireless transceiver is configured for transmitting and receiving signals from a plurality of mobile devices operated by the plurality of umpires. The processor is configured for (1) receiving a start pitch clock device message via the wireless transceiver from each mobile device of the plurality of mobile devices; and (2) upon receiving the start pitch clock device message, transmitting a start pitch clock access point acknowledgment message via the wireless transceiver to the plurality of mobile devices, and each mobile device of the plurality of mobile devices is configured for momentarily activating a haptic feedback device upon receiving the start pitch clock access point acknowledgment message.

In some embodiments, the method may further include starting an external pitch clock timer on the scoreboard controller via the scoreboard controller interface upon receiving the start pitch clock device message.

In some embodiments, the method may further include starting an internal pitch clock timer within the access point upon receiving the start pitch clock device message.

The features and advantages described in this summary and the following detailed description are not all-inclusive. Many additional features and advantages will be apparent to one of ordinary skill in the art in view of the drawings, specification, and claims presented herein.

### BRIEF DESCRIPTION OF THE DRAWINGS

FIG. 1 depicts a diagram illustrating a system for facilitating a plurality of umpires during a baseball game in accordance with embodiments of the present disclosure.
FIG. 2 depicts a diagram a diagram 200 illustrating a side view and a front view of a mobile device of FIG. 1 in accordance with embodiments of the present disclosure.
FIG. 3 depicts a block diagram of the mobile device of FIG. 1 and FIG. 2 in accordance with embodiments of the present disclosure.
FIG. 4 depicts a diagram illustrating a top view, a front view, a right side view, and a left side view of an access point of FIG. 1 in accordance with embodiments of the present disclosure.
FIG. 5 depicts a block diagram illustrating the access point of FIG. 1 and FIG. 4 in accordance with embodiments of the present disclosure.
FIG. 6 depicts a flowchart illustrating a method implemented on the mobile device of FIG. 1, FIG. 2, and FIG.3 in accordance with embodiments of the present disclosure.
FIG. 7 depicts a flowchart illustrating a method implemented on the access point of FIG. 1, FIG. 4, and FIG. 5 in accordance with embodiments of the present disclosure.

### DETAILED DESCRIPTION

The following description and drawings are illustrative and are not to be construed as limiting. Numerous specific details are described to provide a thorough understanding of the disclosure. However, in certain instances, well-known or conventional details are not described in order to avoid obscuring the description.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way.

Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification, including examples of any terms discussed herein, is illustrative only, and is not intended to further limit the scope and meaning of the disclosure or of any exemplified term. Likewise, the disclosure is not limited to various embodiments given in this specification.

Unless otherwise indicated, all numbers expressing quantities of components, conditions, and so forth used in the specification and claims are to be understood as being modified in all instances by the term "about". Accordingly, unless indicated to the contrary, the numerical parameters set forth in the instant specification and attached claims are approximations that can vary depending upon the desired properties sought to be obtained by the presently disclosed subject matter.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

Game officials for baseball include the umpire-in-chief (i.e., plate umpire) and one or more field umpires (i.e., base umpires). A field umpire may take any position desired and shall aid the umpire-in-chief in administering the rules. Disclosed herein are methods, devices, and systems for facilitating umpires officiating a baseball game. Baseball has recently introduced a pitch clock for minor league and collegiate games. More specifically, the disclosed methods devices, and systems give the umpires the ability to start, stop, and reset three different clocks (including a pitch clock) that are visible on the scoreboard and on their individual belt packs (i.e., mobile devices).

A first clock is a twenty second pitch clock that vibrates after ten seconds alerting the umpire-in-chief that the batter is not in the box. Under that scenario, an automatic strike will be called by rule. Once twenty seconds have expired, a final vibration alerts the umpire-in-chief that the pitcher must have started their wind-up. If the pitcher has not started their wind-up, an automatic ball will be called by rule. The first clock interval and early warning may be adjusted to any given league requirement.

A second clock is a two minute between inning clock that vibrates at a ninety second mark to alert at least one umpires to inform the pitcher for one last warmup pitch. A final vibration at one hundred twenty seconds alerts the umpires to begin the inning. The second clock interval and early warning may be adjusted to any given league requirement.

A third clock is a thirty second between-batters clock that vibrates at a twenty-two second mark to provide an early warning of expiration. A final vibration at thirty seconds alerts the umpires to the expiration. The third clock interval and early warning may be adjusted to any given league requirement.

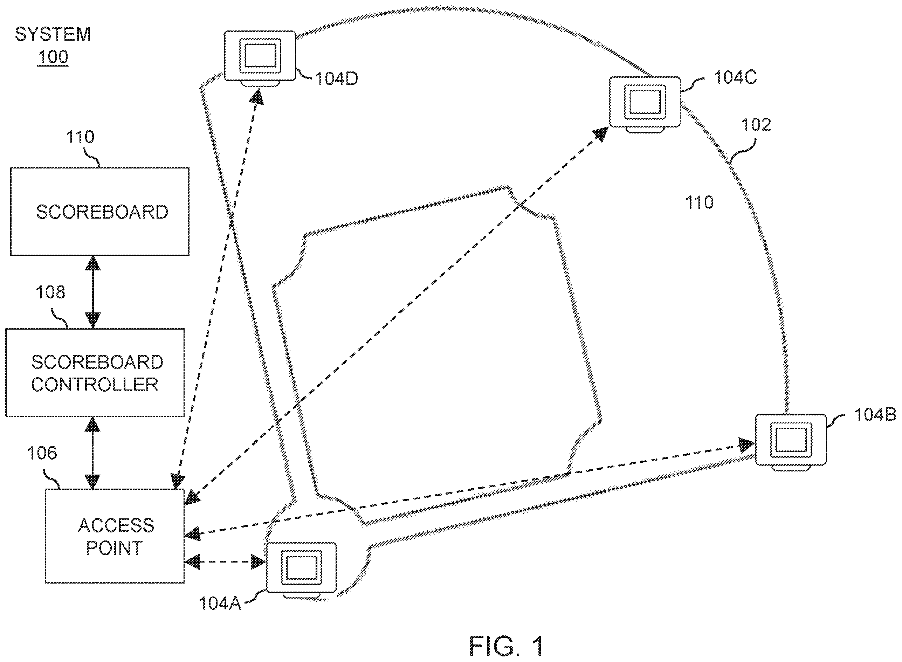

Figure 1 depicts a diagram illustrating a system 100 for facilitating a plurality of umpires during a baseball game in accordance with embodiments of the present disclosure. A baseball diamond 102 is depicted with mobile devices 104A - 104D (e.g., belt packs) that may be carried on the waist bands or belts of four umpires (not shown in Figure 1). The mobile devices 104A - 104D communicate over radio frequency (RF) wireless links with an access point 106. The access point 106 is electrically coupled with a scoreboard control console 108. A scoreboard 110 is either electrically coupled or wirelessly coupled with the scoreboard control console 108. The scoreboard control console 108 may be an OES control console, a Daktronics control console, or the like.

The access point 106 utilizes a DIN connector with unique cables to interface with specific wiring and connector interfaces for different manufacturers' control consoles (e.g., an XLR for the OES control consoles and an RJ11 for the Daktronics control consoles). The input and output communications between the access point 106 and scoreboard control console 108 include isolated switched state (dry contact) signals. The access point 106 has an input port requiring remote dry contact control that can be programmatically defined to accommodate features supported by various scoreboard controllers (e.g., the scoreboard controller may output a state change when the clock reaches zero). The access point 106 supports the ability to program and map input and output connections for specific functions and wiring configurations.

The mobile devices 104A - 104D can each detect umpire inputs on a user interface (UI), and immediately send a message to the access point 106. The access point 106 receives the message, decodes the message, and activates one or more remote inputs of the scoreboard control console 108 to either start or stop the clocks. The access point 106 also sends the mobile devices 104A - 104C an acknowledgement that the message was successfully received. The mobile devices 104A - 104D use the acknowledgement to drive a haptic vibration motor (i.e., haptic feedback device) alerting the umpires of a status change. The entire transaction typically takes place in less than 50 milliseconds (mS). This response time is faster and more consistent than a human's reaction at the scoreboard control console 108 watching for umpire signals.

The RF wireless links operate over a 902 mega-Hertz (MHz) to 928 MHz frequency band, which is outside the more used Bluetooth^{®} and Wi-Fi frequency bands. The 902 MHz to 928 MHz frequency band provides excellent range and propagation characteristics as compared to the Bluetooth^{®} and Wi-Fi frequency bands. The RF wireless links specifically use Wide-band Direct Sequence Spread Spectrum (WBDSSS) technology to minimize interference on a given link channel. Data for each RF wireless link of the mobile devices 104A - 104C is spread across five channels each having a 200 kilohertz (kHz) spacing (i.e., providing a 1 MHz wide effective channel). There are a total of 123 available channels with center frequencies of each 1 MHz effective channel on channels 3, 8, 13, ... 123 (i.e., 902.8 MHz, 903.8 MHz, 904.8 MHz, ... 926.8 MHz). The RF wireless links are each wide-band half-duplex spread spectrum. In some embodiments, frequency hopping may be employed for the RF wireless links.

The access point 106 may also sample a local RF spectrum at the baseball diamond 102 and surrounding area for interference, and dynamically select the best channels for device commissioning and operation of the mobile devices 104A - 104D. In some embodiments, RF mitigation steps such as separating the proximity of the mobile devices 104A - 104D and the access point 106 may be required.

The mobile devices 104A - 104C and the access point 106 may each transmit up to a power level of +10 decibel-milliwatts (dBm) with a receiver sensitivity of -110 dBm yielding a received signal strength indicator (RSSI) dynamic range of 95dB. This provides much overhead for blockage of any of the RF wireless signals due to the bodies of players, base coaches, and/or umpires. The mobile devices 104A - 104D each include a helical printed circuit board (PCB) antenna. The access point 106 includes an external one half wave dipole antenna. Additionally, WBDSSS modulation enables Forward Error Correction (FEC) using K=4 as the constraint length in a convolutional encoder.

To minimize power consumption and prolong battery life, the mobile devices 104A - 104D operate in a non-beacon mode and each generate a status/keep-alive message at a programmable interval. The status/keep-alive messages contain statistics associated with the mobile devices 104A - 104C including their battery status. During network establishment, each of the mobile devices 104A - 104C scan for incoming messages from the access point 106 at approximately 500 mS intervals to service key regeneration commands, over the air download commands, and remote configuration or control commands. This scan interval is also configurable.

Each of the mobile devices 104A - 104D has a unique identifier (ID) in the form of a six-byte media access control (MAC) address and a configurable four-byte serial number. Up to fifty mobile devices may be supported by the access point 106. However, the access point 106 may be typically configured to handle only two to five mobile devices per network session (i.e., required umpires for baseball game) as a default.

The network is compliant to the Institute of Electrical and Electronics Engineers (IEEE) 802.15.4 standard defining the MAC layer protocol.

Advanced Encryption Standard (AES) 128 encryption/decryption is used for the data at the MAC layer. The mobile devices 104A - 104D and the access point 106 use secure commissioning with shared secret network keys for initial pairing (AES-CMAC). Unique dynamic device keys are generated using Elliptic Curve Diffie Hellman (ECDH) p256 during commissioning for run-time data exchange. The access point 106 communicates only with mobile devices with the shared secret key, and only accepts data that is encrypted with the dynamic device keys. The access point 106 controls both the generation and the storage of the dynamic device keys. Additional security is provided by limiting the number of associated mobile devices active during the network session (e.g., five devices - mobile devices 104A - 104D and one spare mobile device). This number is also configurable.

All communications between the mobile devices 104A - 104D and the access point 106 are acknowledged by a return message/packet. The system 100 is further configured to detect umpire input and alert the scoreboard control console 108 in less than 50 mS. The mobile devices 104A - 104D are also configured to alert each other via the access point 106 and initiating via haptic feedback in less than 250 mS.

The access point 106 logs and stores data of the mobile devices 104A - 104D including timestamps, device IDs, events, and event data. For example, the event data may include when a scoreboard reaches 0:00:00 and/or game clock, inning, time-outs, etc. Real time and stored data are available for Internet export. The access point 106 may be connected to the Internet via a Wi-Fi and/or Ethernet connection. Data may also be stored in the cloud in addition to a removable Secure Digital (SD) card.

Configuration data of the mobile devices 104A - 104D is available via a remote application program interface (API) while connected with the access point 106. Additionally, software within the mobile devices 104A - 104D may be updated by the remote API.

In a specific embodiment. the processor of each mobile device 104A-104D may be configured for:
- receiving a start pitch clock selection via the user interface;
- upon receiving the start pitch clock selection via the user interface, transmitting a start pitch clock device message via the wireless transceiver to the access point 106;
- receiving a start pitch clock access point acknowledgment message from the access point 106;
- upon receiving the start pitch clock access point acknowledgment message, momentarily activating the haptic feedback device;
- upon receiving the start pitch clock device message the access point resetting the external pitch clock timer on the scoreboard controller prior to starting the external pitch clock timer and/or resetting the internal pitch clock timer within the access point prior to starting the internal pitch clock timer;
- receiving a reset pitch clock selection via the user interface;
- upon receiving the reset pitch clock selection via the user interface, transmitting a reset pitch clock device message via the wireless transceiver to the access point 106;
- receiving a reset pitch clock access point acknowledgment message from the access point 106;
- upon receiving the reset pitch clock access point acknowledgment message, momentarily activating the haptic feedback device;
- receiving a start between-inning clock selection via the user interface;
- upon receiving the start between-inning clock selection via the user interface, transmitting a start between-inning clock device message via the wireless transceiver to the access point 106;
- receiving a start between-inning clock access point acknowledgment message from the access point 106;
- upon receiving the start between-inning clock access point acknowledgment message, momentarily activating the haptic feedback device;
- receiving an increment ball count selection via the user interface;
- upon receiving the increment ball count selection via the user interface, transmitting an increment ball count device message via the wireless transceiver to the access point 106;
- receiving an increment ball count access point acknowledgment message from the access point;
- upon receiving the increment ball count access point acknowledgment message, momentarily activating the haptic feedback device;
- receiving an increment strike count selection via the user interface;
- upon receiving the increment strike count selection via the user interface, transmitting an increment strike device message via the wireless transceiver to the access point 106;
- receiving an increment strike count access point acknowledgment message from the access point 106;
- receiving the increment strike count access point acknowledgment message;
- momentarily activating the haptic feedback device, upon receiving the increment strike count access point acknowledgment message;
- receiving a batter-must-be-in-box message from the access point; and momentarily activating the haptic feedback device upon receiving the batter-must-be-in-box message;
- receiving a pitch clock expiration message from the access point 106;
- momentarily activating the haptic feedback device upon receiving the pitch clock expiration message;
- receiving a between-inning warning message from the access point 106;
- momentarily activating the haptic feedback device upon receiving the between-inning warning message;
- receiving a between-inning expiration message from the access point;
- momentarily activating the haptic feedback device upon receiving the between-inning expiration message;
- receiving the start pitch clock selection via a the pitch-clock-momentary switch;
- receiving the start pitch clock selection via either a no-runners-on-base-pitch-clock-momentary switch or a runners-on-base-pitch-clock momentary switch;
- receiving the start between-inning clock selection via a between-inning clock momentary switch;
- receiving a start between-batter clock selection via the user interface and transmitting a start between-batter clock device message via the wireless transceiver to the access point upon receiving the start between-batter clock selection;
- receiving a start between-batter clock access point acknowledgment message from the access point and upon receiving the start between-batter clock access point acknowledgment message, momentarily activating the haptic feedback device;
- receiving a between-batter warning message from the access point and momentarily activating the haptic feedback device upon receiving the between-inning warning message;
- receiving the start between-batter clock selection via a between-batter clock momentary switch; and
- receiving a between-batter expiration message from the access point and momentarily activating the haptic feedback device upon receiving the between-batter expiration message.

Additionally in this specific embodiment. the processor of the access point 106 may be configured for:
- receiving a start pitch clock device message via the wireless transceiver from each mobile device of the plurality of mobile devices 104A-104D;
- upon receiving the start pitch clock device message from any one of the plurality of mobile devices 104A-104D, transmitting a start pitch clock access point acknowledgment message via the wireless transceiver to the plurality of mobile devices 104A-104D;
- upon receiving the start pitch clock device message, starting an external pitch clock timer on the scoreboard controller via the scoreboard controller interface upon receiving the start pitch clock device message, and/or starting an internal pitch clock timer within the access point;
- resetting the external pitch clock timer on the scoreboard controller prior to starting the external pitch clock timer and/or resetting the internal pitch clock timer within the access point prior to starting the internal pitch clock timer.
- receiving a reset pitch clock device message via the wireless transceiver from each mobile device of the plurality of mobile devices 104A-104D;
- upon receiving the reset pitch clock device message from any one of the plurality of mobile devices, transmitting a reset pitch clock access point acknowledgment message via the wireless transceiver to the plurality of mobile devices 104A-104D;
- resetting the external pitch clock timer on the scoreboard controller via the scoreboard controller interface upon receiving the reset pitch clock device message and/or resetting the internal pitch clock timer within the access point upon receiving the reset pitch clock device message;
- receiving a start between-inning clock device message via the wireless transceiver from each mobile device of the plurality of mobile devices 104A-104D;
- upon receiving the start between-inning clock device message from any one of the plurality of mobile devices 104A-104D, transmitting a start between-inning clock access point acknowledgment message via the wireless transceiver to the plurality of mobile devices 104A-104D;
- starting an external between-inning clock timer on the scoreboard controller via the scoreboard controller interface upon receiving the start between-inning clock device message and/or starting an internal between-inning clock timer within the access point upon receiving the start between-inning clock device message;
- receiving an increment ball count device message via the wireless transceiver from each mobile device of the plurality of mobile devices 104A-104D;
- upon receiving the increment ball count device message from any one of the plurality of mobile devices 104A-104D, transmitting an increment ball count access point acknowledgment message via the wireless transceiver to the plurality of mobile devices 104A-104D;
- configuring the scoreboard controller, via the scoreboard controller interface, for incrementing a ball count on the scoreboard controller upon receiving the start between-inning clock device message;
- receiving an increment strike count device message via the wireless transceiver from each mobile device of the plurality of mobile devices 104A-104D;
- upon receiving the increment strike count device message from any one of the plurality of mobile devices 104A-104D, transmitting an increment strike count access point acknowledgment message via the wireless transceiver to the plurality of mobile devices 104A-104D;
- configuring the scoreboard controller, via the scoreboard controller interface, for incrementing a strike count on the scoreboard controller upon receiving the start between-inning clock device message;
- receiving a batter-must-be-in-box scoreboard message from the scoreboard controller interface;
- upon receiving the batter-must-be-in-box scoreboard message, transmitting a batter-must-be-in-box access point message via the wireless transceiver to the plurality of mobile devices 104A-104D;
- receiving a pitch clock expiration scoreboard message from the scoreboard controller interface;
- upon receiving the pitch clock expiration scoreboard message, transmitting a pitch clock expiration access point message via the wireless transceiver to the plurality of mobile devices 104A-104D;
- receiving a between-inning warning scoreboard message from the scoreboard controller interface;
- upon receiving the between-inning warning scoreboard message, transmitting a between-inning warning access point message via the wireless transceiver to the plurality of mobile devices 104A-104D;
- receiving a between-inning expiration scoreboard message from the scoreboard controller interface;
- upon receiving the between-inning expiration scoreboard message, transmitting a between-inning expiration access point message via the wireless transceiver to the plurality of mobile devices 104A-104D;
- receiving a start between-batter clock device message via the wireless transceiver from each mobile device of the plurality of mobile devices; and upon receiving the start between-batter clock device message from any one of the plurality of mobile devices, transmitting a start between-batter clock access point acknowledgment message via the wireless transceiver to the plurality of mobile devices;
- starting an external between-batter clock timer on the scoreboard controller via the scoreboard controller interface upon receiving the start between-batter clock device message; and/or starting an internal between-batter clock timer within the access point upon receiving the start between-inning clock device message;
- receiving a between-batter warning scoreboard message from the scoreboard controller interface; and upon receiving the between-batter warning scoreboard message, transmitting a between-batter warning access point message via the wireless transceiver to the plurality of mobile devices;
- receiving a between-batter expiration scoreboard message from the scoreboard controller interface; and upon receiving the between-batter expiration scoreboard message, transmitting a between-batter expiration access point message via the wireless transceiver to the plurality of mobile devices.

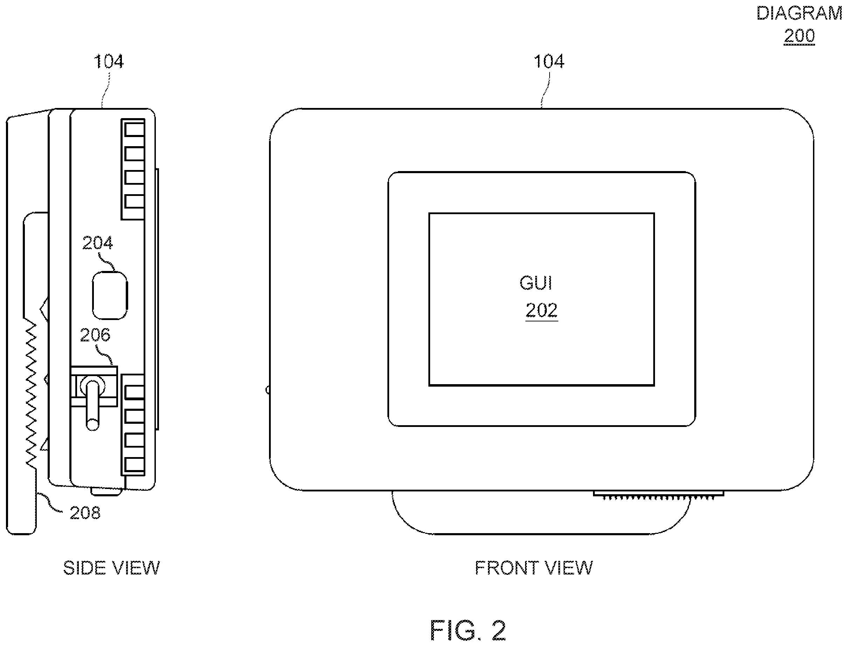

Figure 2 depicts a diagram 200 illustrating a side view and a front view of a mobile device 104 of Figure 1 in accordance with embodiments of the present disclosure. The mobile device 104 includes rechargeable lithium batteries and a universal serial bus (USB) charging port. In some embodiments, the mobile device 104 may include a wireless charging port. The mobile device 104 is lightweight and is configured to enter a sleep mode after approximately fifteen minutes of inactivity. The mobile device 104 is configured to save configuration data using onboard flash memory. Configuration data includes an access point ID, a network ID, frequency bands, frequency channels, serial number, and encryption/decryption keys.

The mobile device 104 also includes a graphical user interface (GUI) 202. Specifically, the GUI 202 may include a color thin-film transistor (TFT) display with light emitting diode (LED) backlight supporting custom graphics and touch screen. Tilt based operation further conserves battery light by dimming the GUI 202 when not being viewed by an umpire. Additionally, the mobile device 104 includes a momentary switch 204 and a toggle switch 206. The mobile device 104 may include additional momentary switches, toggle switches, and/or other types of switches on other sides of the mobile device 104 (not shown in FIG. 2). The mobile device 104 also includes a belt clip 208. Switches are positioned on the mobile device 104 in such a manner that an umpire can utilize the mobile device 104 while clipped to a belt. The GUI 202 may be used for additional features to facilitate the umpire. For example, an icon on the GUI 202 may launch a stopwatch application. The stopwatch application may use one or more of the switches on the sides of the mobile device 104 or GUI 202 for start, stop, lap, and reset features. The stopwatch application may use haptic feedback to indicate when and which switch was activated and/or a timer expired, such as a countdown feature of the stopwatch.

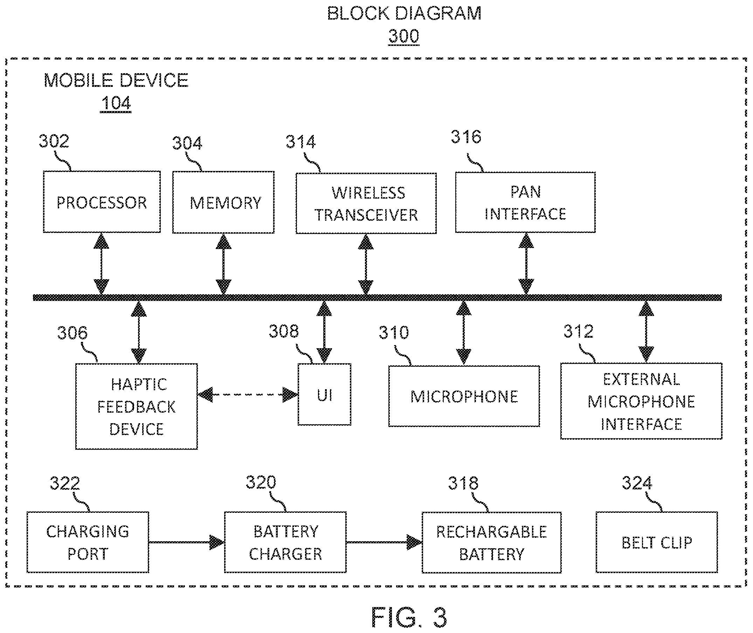

FIG. 3 depicts a block diagram 300 of the mobile device 104 of Figures 1 and 2 in accordance with embodiments of the present disclosure. The mobile device 104 includes a processor 302, a memory 304, a haptic feedback device 306 and a user interface (UI) 308. In some embodiments, the memory 304 or a portion of the memory 304 may be integrated with the processor 1302. The memory 304 may include a combination of volatile memory and nonvolatile memory. In some embodiments the processor 302 and the memory 304 may be embedded in a microcontroller. The UI 308 includes a touchpad display and a plurality of momentary switches positioned for easy access by an umpire without having direct eye contact with the mobile device 104 as disclosed in the description of FIG. 2. The haptic feedback device 306 may be mechanically coupled with a case of the mobile device 104 and/or the UI 308. The haptic feedback device 306 may be configured to provide a plurality of unique vibrations patterns to the umpire without having to be viewing the mobile device 104. The plurality of vibrations patterns may include a plurality of unique vibration frequencies and/or a plurality of unique vibration on-off sequences.

The mobile device 104 also includes a microphone 310 and an external microphone interface 312. The external microphone interface 312 may be configured to be coupled with a lavalier microphone. The mobile device 104 may be further configured to accept audio (e.g., speech) from an umpire and relay to a public address (PA) system (not shown in Figure 1)

The mobile device 104 further includes a wireless transceiver 314 and a PAN interface 316. The wireless transceiver 314 may be configured to transmit and receive WBDSSS compliant signals. The WBDSSS signals may be associated with a 902 MHz to 928 MHz frequency band.

The PAN interface 316 may be compliant to at least one version of a Bluetooth^{®} standard. The PAN interface 316 may also be configured to wirelessly couple to an external microphone (e.g., a Bluetooth microphone).

The mobile device 104 derives power from a rechargeable battery 318. A battery charger 320 is configured to receive external power from a charging port 322. The charging port 322 may be configured to be coupled to a USB charger. The wireless charging port 322 may also be a wireless charging port. A belt clip 324 is included for attaching the mobile device 104 to a game official (e.g., umpire).

The microphone 302 easily adapts to standard lanyards and is tuned to the internal detection circuits of the mobile device 104. Larger cabling and flexible insulation resists wire breakage while electrically coupling the microphone 302 to the mobile device 104. In some embodiments, a wireless microphone (not shown in Figure 3) may be used.

The mobile device 104 also includes haptic feedback technology for responding to acknowledgement packets/messages received from the access point 106. Patterns and intensity of haptic feedback are under software.

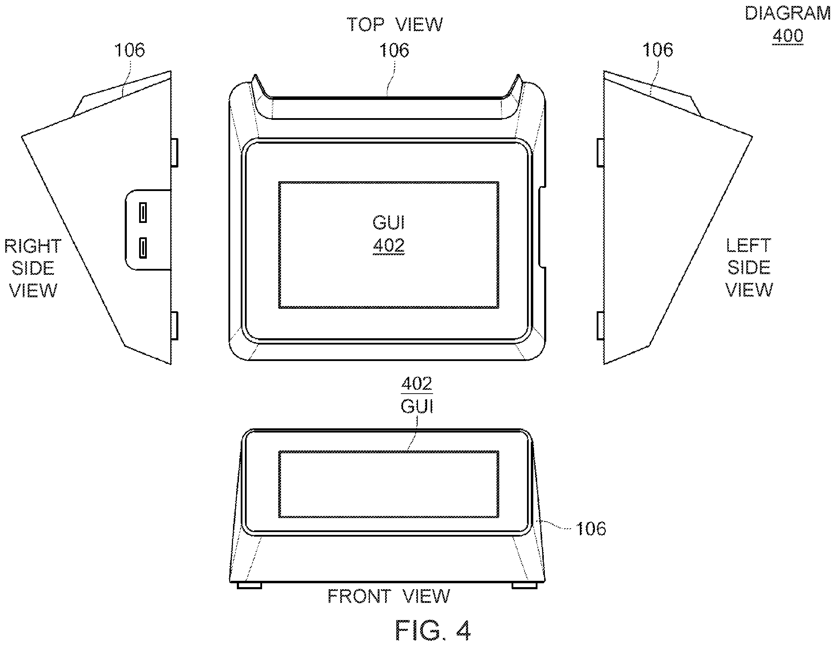

Figure 4 depicts a diagram 400 illustrating a front view, a top view, a right side view and a left side view of the access point 106 of Figure 1 in accordance with embodiments of the present disclosure. Diagram 400 also illustrates a GUI 402 of the access point 106.

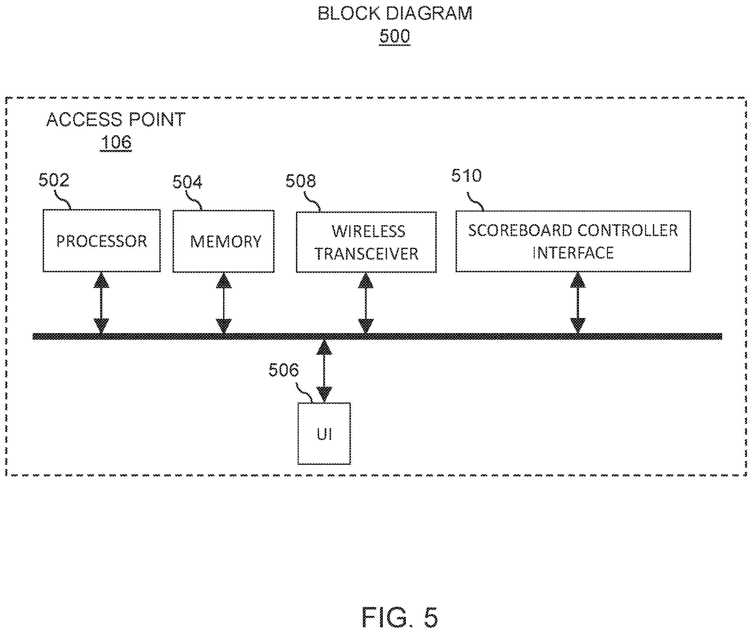

FIG. 5 depicts a block diagram 500 illustrating the access point 106 of FIG. 1 and FIG. 4 in accordance with embodiments of the present disclosure. The access point 106 includes a processor 502, a memory 504, a user interface (UI) 506, a wireless transceiver 508, and a scoreboard controller interface 510. The UI includes the GUI 402 of FIG. 4 and may include additional switches, such as momentary switches. The UI 506 may be used by a scoreboard operator to implement any of the UI functions of the mobile device 104. The UI 506 may also be used for the initial pairing of the plurality the mobile devices 104A-104D with the access point 106. The wireless transceiver 508 may be configured to transmit and receive WBDSSS compliant signals. The WBDSSS signals may be associated with a 902 MHz to 928 MHz frequency band.

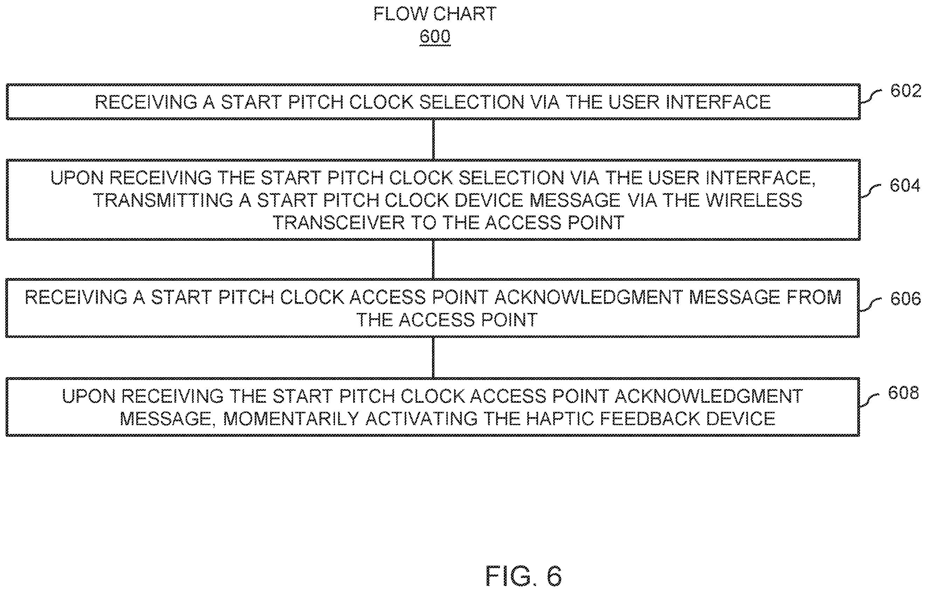

In broader embodiments, FIG. 6 depicts a flowchart 600 illustrating a method implemented on the mobile device 104 of FIG. 1, FIG. 2, and FIG. 3 in accordance with embodiments of the present disclosure. In step 602, the method includes receiving a start pitch clock selection via the user interface 308. In step 604, the method further includes upon receiving the start pitch clock selection via the user interface 308, transmitting a start pitch clock device message via the wireless transceiver 314 to the access point 106. In step 606, the method further includes receiving a start pitch clock access point acknowledgment message from the access point 106 via wireless transceiver 314. In step 608, upon receiving the start pitch clock access point acknowledgment message, momentarily activating the haptic feedback device 306.

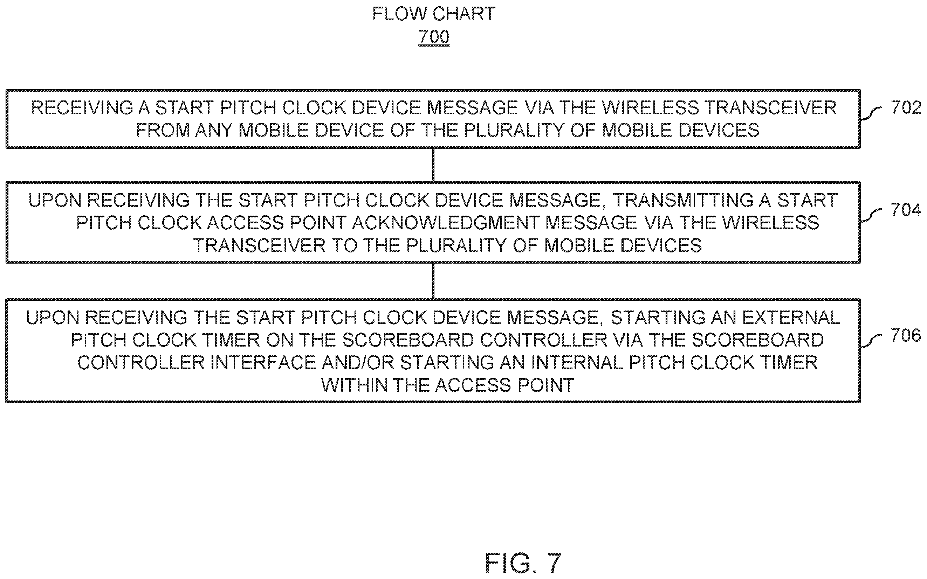

In broader embodiments, FIG. 7 depicts a flowchart 700 illustrating a method implemented on the access point 106 of FIG. 1, FIG. 4, and FIG. 5 in accordance with embodiments of the present disclosure. In step 702, the method includes receiving a start pitch clock device message via the wireless transceiver from any one of the plurality of mobile devices 104A-104D. In step 704, upon receiving the start pitch clock device message from any one of the plurality the mobile devices 104A-104D, transmitting a start pitch clock access point acknowledgment message via the wireless transceiver 508 to the plurality of mobile devices 104A-104d. In step 706, the method further includes upon receiving the start pitch clock device message from any one of the plurality the mobile devices 104A-104D, starting an external pitch clock timer on the scoreboard controller 108 via the scoreboard controller interface 510, and/or starting an internal pitch clock timer within the access point 106.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium (including, but not limited to, non-transitory computer readable storage media). A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including object oriented and/or procedural programming languages. Programming languages may include, but are not limited to: Ruby, JavaScript, Java, Python, Ruby, PHP, C, C++, C#, Objective-C, Go, Scala, Swift, Kotlin, OCaml, or the like. The program code may execute entirely on the user's computer, partly on the user's computer, as a stand-alone software package, partly on the user's computer, and partly on a remote computer or entirely on the remote computer or server.

Aspects of the present invention are described in the instant specification with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions.

These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular embodiments only and is not intended to be limiting of the invention. As used herein, the singular forms "a," "an" and "the" are intended to include the plural forms as well, unless the context clearly indicates otherwise. Thus, for example, reference to "a user" can include a plurality of such users, and so forth. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description. The embodiment was chosen and described in order to best explain the principles of the invention and the practical application, and to enable others of ordinary skill in the art to understand the invention for various embodiments with various modifications as are suited to the particular use contemplated.

The descriptions of the various embodiments of the present invention have been presented for purposes of illustration. The terminology used herein was chosen to best explain the principles of the embodiments, the practical application or technical improvement over technologies found in the marketplace, or to enable others of ordinary skill in the art to understand the embodiments disclosed herein.

## Claims

1. A mobile device for facilitating an umpire of a baseball game, the mobile device comprising:
a processor;
a memory electrically coupled with the processor;
a user interface electrically coupled with the processor;
a haptic feedback device electrically coupled with the processor; and
a wireless transceiver electrically coupled with the processor, wherein the processor is configured for:
receiving a start pitch clock selection via the user interface;
upon receiving the start pitch clock selection via the user interface, transmitting a start pitch clock device message via the wireless transceiver to an access point;
receiving a start pitch clock access point acknowledgment message from the access point;
upon receiving the start pitch clock access point acknowledgment message, momentarily activating the haptic feedback device, wherein:
the access point is electrically coupled with a scoreboard controller;
the access point is configured for at least one of:
starting an external pitch clock timer on the scoreboard controller upon receiving the start pitch clock device message; and
starting an internal pitch clock timer within the access point upon receiving the start pitch clock device message;
wherein the processor is further configured for:
receiving a batter-must-be-in-box message from the access point; and
momentarily activating the haptic feedback device upon receiving the batter-must-be-in-box message, wherein the batter-must-be-in-box message is transmitted from the access point based on a first time interval after receiving the start pitch clock device message.

2. The mobile device of claim 1, wherein:
the user interface includes a pitch-clock momentary switch;
the processor is further configured for receiving the start pitch clock selection via the pitch-clock momentary switch; and
the first time interval is associated with a league pitch clock time requirement.

3. The mobile device of claim 2, wherein:
the user interface includes a no-runners-on-base-pitch-clock momentary switch and a runners-on-base-pitch-clock momentary switch;
the processor is further configured for receiving the start pitch clock selection via either the no-runners-on-base-pitch-clock-momentary switch or the runners-on-base-pitch-clock momentary switch;
upon receiving the start pitch clock selection via the no-runners-on-base-pitch-clock-momentary switch, the first time interval becomes associated with a league no-runners-on-base pitch clock time requirement; and
upon receiving the start pitch clock selection via the runners-on-base-pitch-clock-momentary switch, the first time interval becomes associated with a league runners-on-base pitch clock time requirement.

4. The mobile device of claim 1, wherein the processor is further configured for:
receiving a pitch clock expiration message from the access point; and
momentarily activating the haptic feedback device upon receiving the pitch clock expiration message, wherein the pitch clock expiration message is transmitted from the access point based on a second time interval after receiving the start pitch clock device message.

5. The mobile device of claim 4, wherein the second time interval is associated with a league pitch clock time requirement.

6. The mobile device of claim 4, wherein:
the second time interval is associated with a league no-runners-on-base pitch clock time requirement; and
the second time interval is associated with a league runners-on-base pitch clock time requirement.

7. The mobile device of claim 1, wherein the processor is further configured for:
receiving a start between-inning clock selection via the user interface
upon receiving the start between-inning clock selection via the user interface, transmitting a start between-inning clock device message via the wireless transceiver to the access point;
receiving a start between-inning clock access point acknowledgment message from the access point; and
upon receiving the start between-inning clock access point acknowledgment message, momentarily activating the haptic feedback device, wherein the access point is further configured for at least one of:
starting an external between-inning clock timer on the scoreboard controller upon receiving the start between inning clock device message; and
starting an internal between-inning clock timer within the access point upon receiving the start between inning clock device message.

8. The mobile device of claim 7, wherein the processor is further configured for:
receiving a between-inning warning message from the access point; and
momentarily activating the haptic feedback device upon receiving the between-inning warning message, wherein the between-inning warning message is transmitted from the access point based on a third time interval after receiving the start between-inning clock device message.

9. The mobile device of claim 8, wherein:
the user interface includes a between-inning clock momentary switch;
the processor is further configured for receiving the start between-inning clock selection via between-inning clock momentary switch; and
the third time interval is associated with a league between-inning clock time requirement.

10. The mobile device of claim 8, wherein the processor is further configured for:
receiving a between-inning expiration message from the access point; and
momentarily activating the haptic feedback device upon receiving the between-inning expiration message, wherein:
the between-inning expiration message is transmitted from the access point based on a fourth time interval after receiving the start between-inning clock device message; and
the fourth time interval is associated with a league between-inning clock time requirement.

11. The mobile device of claim 10, wherein the processor is further configured for:
receiving a start between-batter clock selection via the user interface;
upon receiving the start between-batter clock selection via the user interface, transmitting a start between-batter clock device message via the wireless transceiver to the access point;
receiving a start between-batter clock access point acknowledgment message from the access point; and
upon receiving the start between-batter clock access point acknowledgment message, momentarily activating the haptic feedback device, wherein the access point is further configured for at least one of:
starting an external between-batter clock timer on the scoreboard controller upon receiving the start between-batter clock device message; and
starting an internal between-batter clock timer within the access point upon receiving the start between-batter clock device message.

12. The mobile device of claim 11, wherein the processor is further configured for:
receiving a between-batter warning message from the access point; and
momentarily activating the haptic feedback device upon receiving the between-batter warning message, wherein the between-batter warning message is transmitted from the access point based on a fifth time interval after receiving the start between-batter clock device message.

13. The mobile device of claim 12, wherein:
the user interface includes a between-batter clock momentary switch;
the processor is further configured for receiving the start between-batter clock selection via between-batter clock momentary switch; and
the fifth time interval is associated with a league between-batter clock time requirement.

14. The mobile device of claim 12, wherein the processor is further configured for:
receiving a between-batter expiration message from the access point; and
momentarily activating the haptic feedback device upon receiving the between-batter expiration message, wherein:
the between-batter expiration message is transmitted from the access point based on a sixth time interval after receiving the start between-batter clock device message; and the sixth time interval is associated with a league between-batter clock time requirement.

## Patentansprüche

1. Mobilvorrichtung zur Erleichterung des Schiedsrichterns bei einem Baseballspiel, wobei die Mobilvorrichtung Folgendes umfasst:
einen Prozessor;
einen Speicher, der elektrisch mit dem Prozessor gekoppelt ist;
eine Benutzerschnittstelle, die elektrisch mit dem Prozessor gekoppelt ist;
eine haptische Rückmeldevorrichtung, die elektrisch mit dem Prozessor gekoppelt ist; und
einen Drahtlos-Sender-Empfänger, der elektrisch mit dem Prozessor gekoppelt ist, wobei der Prozessor für Folgendes konfiguriert ist:
Empfangen einer Startwurfuhr-Auswahl über die Benutzerschnittstelle;
bei Empfangen der Startwurfuhr-Auswahl über die Benutzerschnittstelle Senden einer Startwurfuhr-Vorrichtungsnachricht über den Drahtlos-Sender-Empfänger an einen Zugangspunkt;
Empfangen einer Startwurfuhr-Zugangspunktbetätigungsnachricht von dem Zugangspunkt;
bei Empfangen der Startwurfuhr-Zugangspunktbetätigungsnachricht vorübergehendes Aktivieren der haptischen Rückmeldevorrichtung, wobei:
der Zugangspunkt elektrisch mit einer Zähltafelsteuerung verbunden ist;
der Zugangspunkt für zumindest eines aus folgenden konfiguriert ist:
Starten einer externen Wurfuhr-Zeitgebung an der Zähltafelsteuerung bei Empfangen der Startwurfuhr-Vorrichtungsnachricht; und
Starten einer internen Wurfuhr-Zeitgebung in dem Zugangspunkt bei Empfangen der Startwurfuhr-Vorrichtungsnachricht;
wobei der Prozessor ferner für Folgendes konfiguriert ist:
Empfangen einer Schlagmann-muss-in-der-Box-sein-Nachricht von dem Zugangspunkt; und
vorübergehendes Aktivieren der haptischen Rückmeldevorrichtung bei Empfangen der Schlagmann-muss-in-der-Box-sein-Nachricht, wobei die Schlagmann-muss-in-der-Box-sein-Nachricht von dem Zugangspunkt basierend auf einem ersten Zeitintervall nach dem Empfang der Startwurfuhr-Vorrichtungsnachricht gesendet wird.

2. Mobilvorrichtung nach Anspruch 1, wobei:
die Benutzerschnittstelle einen vorübergehenden Wurfuhrschalter umfasst;
der Prozessor ferner konfiguriert ist, um die Startwurfuhr-Auswahl über den vorübergehenden Wurfuhrschalter zu empfangen; und
das erste Zeitintervall einer Wurfuhr-Zeit-Ligaanforderung zugeordnet ist.

3. Mobilvorrichtung nach Anspruch 2, wobei:
die Benutzerschnittstelle einen vorübergehenden Keine-Läufer-auf-der-Base-Wurfuhrschalter und einen vorübergehenden Läufer-auf-der-Base-Wurfuhrschalter umfasst;
der Prozessor ferner konfiguriert ist, um die Startwurfuhr-Auswahl entweder über den vorübergehenden Keine-Läufer-auf-der-Base-Wurfuhrschalter oder über den vorübergehenden Läufer-auf-der-Base-Wurfuhrschalter zu empfangen;
bei Empfangen der Startwurfuhr-Auswahl über den vorübergehenden Keine-Läufer-auf-der-Base-Wurfuhrschalter das erste Zeitintervall einer Keine-Läufer-auf-der-Base-Wurfuhr-Zeit-Ligaanforderung zugeordnet ist; und
bei Empfangen der Startwurfuhr-Auswahl über den vorübergehenden Läufer-auf-der-Base-Wurfuhrschalter das erste Zeitintervall einer Läufer-auf-der-Base-Wurfuhr-Zeit-Ligaanforderung zugeordnet ist.

4. Mobilvorrichtung nach Anspruch 1, wobei der Prozessor ferner für Folgendes konfiguriert ist:
Empfangen einer Wurfuhrablaufnachricht von dem Zugangspunkt; und
vorübergehendes Aktivieren der haptischen Rückmeldevorrichtung bei Empfangen der Wurfuhrablaufnachricht, wobei die Wurfuhrablaufnachricht von dem Zugangspunkt basierend auf einem zweiten Zeitintervall nach dem Empfang der Startwurfuhr-Vorrichtungsnachricht gesendet wird.

5. Mobilvorrichtung nach Anspruch 4, wobei das zweite Zeitintervall einer Wurfuhr-Zeit-Ligaanforderung zugeordnet ist.

6. Mobilvorrichtung nach Anspruch 4, wobei:
das zweite Zeitintervall einer Keine-Läufer-auf-der-Base-Wurfuhr-Zeit-Ligaanforderung zugeordnet ist; und
das zweite Zeitintervall einer Läufer-auf-der-Base-Wurfuhr-Zeit-Ligaanforderung zugeordnet ist.

7. Mobilvorrichtung nach Anspruch 1, wobei der Prozessor ferner für Folgendes konfiguriert ist:
Empfangen einer Start-zwischen-Innings-Uhr-Auswahl über die Benutzerschnittstelle;
bei Empfangen der Start-zwischen-Innings-Uhr-Auswahl über die Benutzerschnittstelle Senden einer Start-zwischen-Innings-Uhr-Vorrichtungsnachricht über den Drahtlos-Sender-Empfänger an den Zugangspunkt;
Empfangen einer Start-zwischen-Innings-Uhr-Zugangspunktbestätigungsnachricht von dem Zugangspunkt; und
bei Empfangen der Start-zwischen-Innings-Uhr-Zugangspunktbestätigungsnachricht vorübergehendes Aktivieren der haptischen Rückmeldevorrichtung, wobei der Zugangspunkt ferner für eines aus folgenden konfiguriert ist:
Starten einer externen Zwischen-Innings-Uhr-Zeitgebung an der Zähltafelsteuerung bei Empfangen der Start-zwischen-Innings-Uhr-Vorrichtungsnachricht; und
Starten einer internen Zwischen-Innings-Uhr-Zeitgebung in dem Zugangspunkt bei Empfangen der Start-zwischen-Innings-Uhr-Vorrichtungsnachricht.

8. Mobilvorrichtung nach Anspruch 7, wobei der Prozessor ferner für Folgendes konfiguriert ist:
Empfangen einer Zwischen-Innings-Warnnachricht von dem Zugangspunkt; und
vorübergehendes Aktivieren der haptischen Rückmeldevorrichtung bei Empfangen der Zwischen-Innings-Warnnachricht, wobei die Zwischen-Innings-Warnnachricht von dem Zugangspunkt basierend auf einem dritten Zeitintervall nach Empfang der Start-zwischen-Innings-Uhr-Vorrichtungsnachricht gesendet wird.

9. Mobilvorrichtung nach Anspruch 8, wobei:
die Benutzerschnittstelle einen vorübergehenden Zwischen-Innings-Uhrschalter umfasst;
der Prozessor ferner konfiguriert ist, um die Start-zwischen-Innings-Uhr-Auswahl über den vorübergehenden Zwischen-Innings-Uhrschalter zu empfangen; und
das dritte Zeitintervall einer Zwischen-Innings-Uhr-Zeit-Ligaanforderung zugeordnet ist.

10. Mobilvorrichtung nach Anspruch 8, wobei der Prozessor ferner für Folgendes konfiguriert ist:
Empfangen einer Zwischen-Innings-Ablaufnachricht von dem Zugangspunkt; und
vorübergehendes Aktivieren der haptischen Rückmeldenachricht bei Empfangen der Zwischen-Innings-Ablaufnachricht, wobei:
die Zwischen-Innings-Ablaufnachricht von dem Zugangspunkt basierend auf einem vierten Zeitintervall nach dem Empfang der Start-zwischen-Innings-Uhr-Vorrichtungsnachricht gesendet wird; und
das vierte Zeitintervall einer Zwischen-Innings-Uhr-Zeit-Ligaanforderung zugeordnet ist.

11. Mobilvorrichtung nach Anspruch 10, wobei der Prozessor ferner für Folgendes konfiguriert ist:
Empfangen einer Start-zwischen-Schlagmännern-Uhr-Auswahl über die Benutzerschnittstelle;
bei Empfangen der Start-zwischen-Schlagmännern-Uhr-Auswahl über die Benutzerschnittstelle Senden einer Start-zwischen-Schlagmännern-Uhr-Vorrichtungsnachricht über den Drahtlos-Sender-Empfänger an den Zugangspunkt;
Empfangen einer Start-zwischen-Schlagmännern-Uhr-Zugangspunktbestätigungsnachricht von dem Zugangspunkt; und
bei Empfangen der Start-zwischen-Schlagmännern-Uhr-Zugangspunktbestätigungsnachricht vorübergehendes Aktivieren der haptischen Rückmeldevorrichtung, wobei der Zugangspunkt ferner für zumindest eines aus folgenden konfiguriert ist:
Starten einer externen Zwischen-Schlagmännern-Uhr-Zeitgebung an der Zähltafelsteuerung bei Empfangen der Start-zwischen-Schlagmännern-Uhr-Vorrichtungsnachricht; und
Starten einer internen Zwischen-Schlagmännern-Uhr-Zeitgebung in dem Zugangspunkt bei Empfangen der Start-zwischen-Schlagmännern-Uhr-Vorrichtungsnachricht.

12. Mobilvorrichtung nach Anspruch 11, wobei der Prozessor ferner für Folgendes konfiguriert ist:
Empfangen einer Zwischen-Schlagmännern-Warnnachricht von dem Zugangspunkt; und
vorübergehendes Aktivieren der haptischen Rückmeldevorrichtung bei Empfangen der Zwischen-Schlagmännern-Warnnachricht, wobei die Zwischen-Schlagmännern-Warnnachricht von dem Zugangspunkt basierend auf einem fünften Zeitintervall nach dem Empfang der Start-zwischen-Schlagmännern-Uhr-Vorrichtungsnachricht gesendet wird.

13. Mobilvorrichtung nach Anspruch 12, wobei:
die Benutzerschnittstelle einen vorübergehenden Zwischen-Schlagmännern-Uhr-Schalter umfasst;
der Prozessor ferner konfiguriert ist, um die Start-zwischen-Schlagmännern-Uhr-Auswahl über den Zwischen-Schlagmännern-Uhr-Schalter zu empfangen; und
das fünfte Zeitintervall einer Zwischen-Schlagmännern-Uhr-Zeit-Ligaanforderung zugeordnet ist.

14. Mobilvorrichtung nach Anspruch 12, wobei der Prozessor ferner für Folgendes konfiguriert ist:
Empfangen einer Zwischen-Schlagmännern-Ablaufnachricht von dem Zugangspunkt; und
vorübergehendes Aktivieren der haptischen Rückmeldevorrichtung bei Empfangen der Zwischen-Schlagmännern-Ablaufnachricht, wobei:
die Zwischen-Schlagmännern-Ablaufnachricht von dem Zugangspunkt basierend auf einem sechsten Zeitintervall nach dem Empfangen der Start-zwischen-Schlagmännern-Uhr-Vorrichtungsnachricht gesendet wird; und
das sechste Zeitintervall einer Zwischen-Schlagmännern-Uhr-Zeit-Ligaanforderung zugeordnet ist.

## Revendications

1. Dispositif mobile pour aider un arbitre d'un match de baseball, le dispositif mobile comprenant :
un processeur ;
une mémoire couplée électriquement au processeur ;
une interface utilisateur couplée électriquement au processeur ;
un dispositif de retour haptique couplé électriquement au processeur ; et
un émetteur-récepteur sans fil couplé électriquement au processeur, dans lequel le processeur est configuré pour :
recevoir une sélection de démarrage de chronomètre de lancer via l'interface utilisateur ;
dès la réception de la sélection de démarrage de chronomètre de lancer via l'interface utilisateur, transmettre un message de dispositif de démarrage de chronomètre de lancer via l'émetteur-récepteur sans fil à un point d'accès ;
recevoir un message d'accusé de réception de point d'accès de démarrage de chronomètre de lancer en provenance du point d'accès ;
dès la réception du message d'accusé de réception de point d'accès de démarrage de chronomètre de lancer, activer momentanément le dispositif de retour haptique, dans lequel :
le point d'accès est couplé électriquement à un dispositif de commande de tableau d'affichage ;
le point d'accès est configuré pour au moins un parmi :
un démarrage d'un temporisateur externe de chronomètre de lancer sur le dispositif de commande de tableau d'affichage dès la réception du message de dispositif de démarrage de chronomètre de lancer ; et
un démarrage d'un temporisateur interne de chronomètre de lancer dans le point d'accès dès la réception du message de dispositif de démarrage de chronomètre de lancer ;
dans lequel le processeur est en outre configuré pour :
recevoir, en provenance du point d'accès, un message indiquant que le batteur doit se trouver dans la boîte ; et
activer momentanément le dispositif de retour haptique dès la réception du message indiquant que le batteur doit se trouver dans la boîte, dans lequel le message indiquant que le batteur doit se trouver dans la boîte est transmis depuis le point d'accès sur la base d'un premier intervalle de temps après la réception du message de dispositif de démarrage de chronomètre de lancer.

2. Dispositif mobile selon la revendication 1, dans lequel :
l'interface utilisateur inclut un commutateur momentané de chronomètre de lancer ;
le processeur est en outre configuré pour recevoir la sélection de démarrage de chronomètre de lancer via le commutateur momentané de chronomètre de lancer ; et
le premier intervalle de temps est associé à une exigence temporelle de chronomètre de lancer de la ligue.

3. Dispositif mobile selon la revendication 2, dans lequel :
l'interface utilisateur inclut un commutateur momentané de chronomètre de lancer sans coureurs sur les bases et un commutateur momentané de chronomètre de lancer avec coureurs sur les bases ;
le processeur est en outre configuré pour recevoir la sélection de démarrage de chronomètre de lancer via le commutateur momentané de chronomètre de lancer sans coureurs sur les bases ou le commutateur momentané de chronomètre de lancer avec coureurs sur les bases ;
dès la réception de la sélection de démarrage de chronomètre de lancer via le commutateur momentané de chronomètre de lancer sans coureurs sur les bases, le premier intervalle de temps devient associé à une exigence temporelle de chronomètre de lancer sans coureurs sur les bases de la ligue ; et
dès la réception de la sélection de démarrage de chronomètre de lancer via le commutateur momentané de chronomètre de lancer sans coureurs sur les bases, le premier intervalle de temps devient associé à une exigence temporelle de chronomètre de lancer avec coureurs sur les bases de la ligue.

4. Dispositif mobile selon la revendication 1, dans lequel le processeur est en outre configuré pour :
recevoir un message d'expiration de chronomètre de lancer en provenance du point d'accès ; et
activer momentanément le dispositif de retour haptique dès la réception du message d'expiration de chronomètre de lancer, dans lequel le message d'expiration de chronomètre de lancer est transmis depuis le point d'accès sur la base d'un deuxième intervalle de temps après la réception du message de dispositif de chronomètre de lancer.

5. Dispositif mobile selon la revendication 4, dans lequel le deuxième intervalle de temps est associé à une exigence temporelle de chronomètre de lancer de la ligue.

6. Dispositif mobile selon la revendication 4, dans lequel :
le deuxième intervalle de temps est associé à une exigence temporelle de chronomètre de lancer sans coureurs sur les bases de la ligue ; et
le deuxième intervalle de temps est associé à une exigence temporelle de chronomètre de lancer avec coureurs sur les bases de la ligue.

7. Dispositif mobile selon la revendication 1, dans lequel le processeur est en outre configuré pour :
recevoir une sélection de démarrage du chronomètre d'entre-manche via l'interface utilisateur
dès la réception de la sélection de démarrage du chronomètre d'entre-manche via l'interface utilisateur, transmettre au point d'accès un message de dispositif de démarrage du chronomètre d'entre-manche via l'émetteur-récepteur sans fil ;
recevoir un message d'accusé de réception de point d'accès de démarrage du chronomètre d'entre-manche en provenance du point d'accès ; et
dès la réception du message d'accusé de réception de point d'accès de démarrage de chronomètre d'entre-manche, activer momentanément le dispositif de retour haptique, dans lequel le point d'accès est en outre configuré pour au moins une des étapes consistant à :
démarrer un temporisateur de chronomètre d'entremanche externe sur le dispositif de commande de tableau d'affichage dès la réception du message de dispositif de démarrage de chronomètre d'entre-manche ; et
démarrer un temporisateur interne de chronomètre d'entre-manche dans le point d'accès dès la réception du message de dispositif de démarrage de chronomètre d'entre-manche.

8. Dispositif mobile selon la revendication 7, dans lequel le processeur est en outre configuré pour :
recevoir un message d'avertissement d'entre-manche en provenance du point d'accès ; et
activer momentanément le dispositif de retour haptique dès la réception du message d'avertissement d'entre-manche, dans lequel le message d'avertissement d'entre-manche est transmis depuis le point d'accès sur la base d'un troisième intervalle de temps après la réception du message de dispositif de démarrage de chronomètre d'entre-manche.

9. Dispositif mobile selon la revendication 8, dans lequel :
l'interface utilisateur inclut un commutateur momentané de chronomètre d'entre-manche ;
le processeur est en outre configuré pour recevoir la sélection de démarrage de chronomètre d'entre-manche via un commutateur momentané de chronomètre d'entre-manche ; et
le troisième intervalle de temps est associé à une exigence temporelle de chronomètre d'entre-manche de la ligue.

10. Dispositif mobile selon la revendication 8, dans lequel le processeur est en outre configuré pour :
recevoir un message d'expiration d'entre-manche en provenance du point d'accès ; et
activer momentanément le dispositif de retour haptique dès la réception du message d'expiration d'entre-manche, dans lequel :
le message d'expiration d'entre-manche est transmis depuis le point d'accès sur la base d'un quatrième intervalle de temps après avoir reçu le message de dispositif de démarrage de chronomètre d'entre-manche ; et
le quatrième intervalle de temps est associé à une exigence temporelle de chronomètre d'entre-manche de la ligue.

11. Dispositif mobile selon la revendication 10, dans lequel le processeur est en outre configuré pour :
recevoir une sélection de démarrage de chronomètre entre les batteurs via l'interface utilisateur ;
dès la réception de la sélection de démarrage de chronomètre entre les batteurs via l'interface utilisateur, transmettre un message de dispositif de démarrage du chronomètre entre les batteurs via l'émetteur-récepteur sans fil au point d'accès ;
recevoir un message d'accusé de réception de point d'accès de démarrage de chronomètre entre les batteurs en provenance du point d'accès ; et
dès la réception du message d'accusé de réception de point d'accès de démarrage de chronomètre entre les batteurs, activer momentanément le dispositif de retour haptique, dans lequel le point d'accès est en outre configuré pour au moins une des étapes consistant à :
démarrer un temporisateur externe de chronomètre entre les batteurs sur le dispositif de commande de tableau d'affichage dès la réception du message de dispositif de démarrage de chronomètre entre les batteurs ; et
démarrer un temporisateur interne de chronomètre entre les batteurs dans le point d'accès dès la réception du message de dispositif de démarrage de chronomètre entre les batteurs.

12. Dispositif mobile selon la revendication 11, dans lequel le processeur est en outre configuré pour :
recevoir un message d'avertissement entre les batteurs en provenance du point d'accès ; et
activer momentanément le dispositif de retour haptique dès la réception du message d'avertissement entre les batteurs, dans lequel le message d'avertissement entre les batteurs est transmis depuis le point d'accès sur la base d'un cinquième intervalle de temps après la réception du message de dispositif de démarrage de chronomètre entre les batteurs.

13. Dispositif mobile selon la revendication 12, dans lequel :
l'interface utilisateur inclut un commutateur momentané de chronomètre entre les batteurs ;
le processeur est en outre configuré pour recevoir la sélection de démarrage de chronomètre entre les batteurs via un commutateur momentané de chronomètre entre les batteurs ; et
le cinquième intervalle de temps est associé à une exigence temporelle de chronomètre entre les batteurs de la ligue.

14. Dispositif mobile selon la revendication 12, dans lequel le processeur est en outre configuré pour :
recevoir un message d'expiration entre les batteurs en provenance du point d'accès ; et
activer momentanément le dispositif de retour haptique dès la réception du message d'expiration entre les batteurs, dans lequel :
le message d'expiration entre les batteurs est transmis depuis le point d'accès sur la base d'un sixième intervalle de temps après avoir reçu le message de dispositif de démarrage de chronomètre entre les batteurs ; et
le sixième intervalle de temps est associé à une exigence temporelle de chronomètre entre les batteurs de la ligue.
